# EUROPÄISCHE PATENTANMELDUNG

(11) **EP 1 818 648 A2**
(43) Veröffentlichungstag der Anmeldung: **15.08.2007**
(21) Anmeldenummer: 07001364.4
(22) Anmeldetag: 23.01.2007
(51) Int. Cl.: G01B 7/30

(54) **Drehwinkelerfassungsvorrichtung**

(30) Priorität: 14.02.2006 DE 102006006673
(71) Anmelder: Wilhelm Karmann GmbH, 49084 Osnabrück (DE)
(72) Erfinder: Jahn, Jorg, 32257 Bünde (DE); Gudendorf, Peter, 49088 Osnabrück (DE)

(57) **Zusammenfassung**

Drehwinkelerfassungsvorrichtung zum Erfassen des Drehwinkels zwischen mittels eines Lagerzapfens (10; 22) gelenkig miteinander verbundenen Gelenkarmen (2, 4). Dabei ist mit einem Gelenkarm (2, 4) drehfest ein Drehwinkelgeber (8; 18; 30) und mit dem anderen Gelenkarm (2, 4) drehfest ein Auswerteelement (6; 20; 32) verbunden. Der Drehwinkelgeber (8; 18; 30) und das Auswerteelement(6; 20; 32) sind in einem dem Lagerzapfen (10; 22) benachbarten Bereich an zueinander weisenden Flächen der Gelenkarme (2, 4) angeordnet.

## Beschreibung

Die Erfindung betrifft eine Drehwinkelerfassungsvorrichtung für Drehgelenke gemäß dem Oberbegriff des Anspruch 1, insbesondere für Drehgelenke in Gestängen von Faltverdecken.

Die DE 692 08 444 T3, von der im Oberbegriff des Anspruchs 1 ausgegangen wird, beschreibt eine Drehwinkelerfassungsvorrichtung, die die jeweilige Winkelstellung eines Drehgelenks eines Faltdaches misst und die gemessenen Daten an eine Steuereinheit weitergibt. Der Drehwinkel wird von einem Trimmerpotentiometer erfasst, das in einem abgedichteten Gehäuse meist seitlich neben dem Drehgelenk angebracht ist. Bei zur Drehachse koaxialer Anordnung des Trimmerpotentiometers ist die Verbindung der Gelenkarme infolge der koaxialen Welle des Trimmerpotentiometers nur mit erhöhtem Aufwand möglich. Bei seitlicher Anordnung des Trimmerpotentiometers neben dem Drehgelenk wird zusätzlicher Bauraum benötigt, wodurch die Möglichkeiten der Anordnung beweglicher Teile des Verdeckmechanismus eingeschränkt sind.

Aufgabe der vorliegenden Erfindung ist es, eine in ihrem Aufbau einfache Drehwinkelerfassungsvorrichtung insbesondere für Faltdächer vorzusehen, die einen geringen Platzbedarf hat.

Die Aufgabe wird mit einer Drehwinkelerfassungsvorrichtung gemäß Anspruch 1 gelöst.

Die Unteransprüche sind auf vorteilhafte Weiterbildungen der erfindungsgemäßen Drehwinkelerfassungsvorrichtung gemäß Anspruch 1 gerichtet.

Insgesamt wird mit der Erfindung eine einfache, kostengünstige und zuverlässige Möglichkeit geschaffen, die Drehstellung von Gelenkarmen, beispielsweise eines Faltdaches, zu bestimmen, wobei der von der Vorrichtung benötigte Bauraum klein ist, und die Verbindung von Gelenkarmen, die ein Drehgelenk bilden, einfach realisierbar ist.

Die Erfindung wird im Folgenden anhand schematischer Zeichnungen beispielsweise anhand eines Gestänges eines Faltdaches und in weiteren Einzelheiten anhand bevorzugter Ausführungsformen erläutert.

In den Figuren stellen dar:
- Fig. 1: eine schematische Schnittdarstellung eines erfindungsgemäßen Drehgelenks mit einem Folienpotentiometer;
- Fig. 2: eine schematische Aufsicht auf das Drehgelenk der Fig. 1;
- Fig. 3: eine Aufsicht ähnlich der Fig. 1 einer abgeänderten Ausführungsform,
- Fig. 4: eine schematische Schnittdarstellung einer weiteren Ausführungsform eines erfindungsgemäßen Drehgelenks mit einem berührungslosen induktiven System;
- Fig. 5: eine schematische Seitenansicht des Drehgelenks der Fig. 3;
- Fig. 6: eine schematische Aufsicht auf das Drehgelenk der Fig. 3; und
- Fig. 7: eine schematische Schnittdarstellung einer weiteren Ausführungsform eines gemäß der vorliegenden Erfindung ausgebildeten Drehgelenks mit einem berührungslosen magnetischen System.

Nachfolgend wird beispielhaft ein aus zwei Gelenkarmen 2 und 4 aufgebautes Drehgelenk 1 beschrieben. Die Erfindung ist weder auf die Anzahl der Gelenkarme noch auf deren Ausführungsform beschränkt. Weiterhin ist die Erfindung nicht auf Drehgelenke für Faltdächer beschränkt.

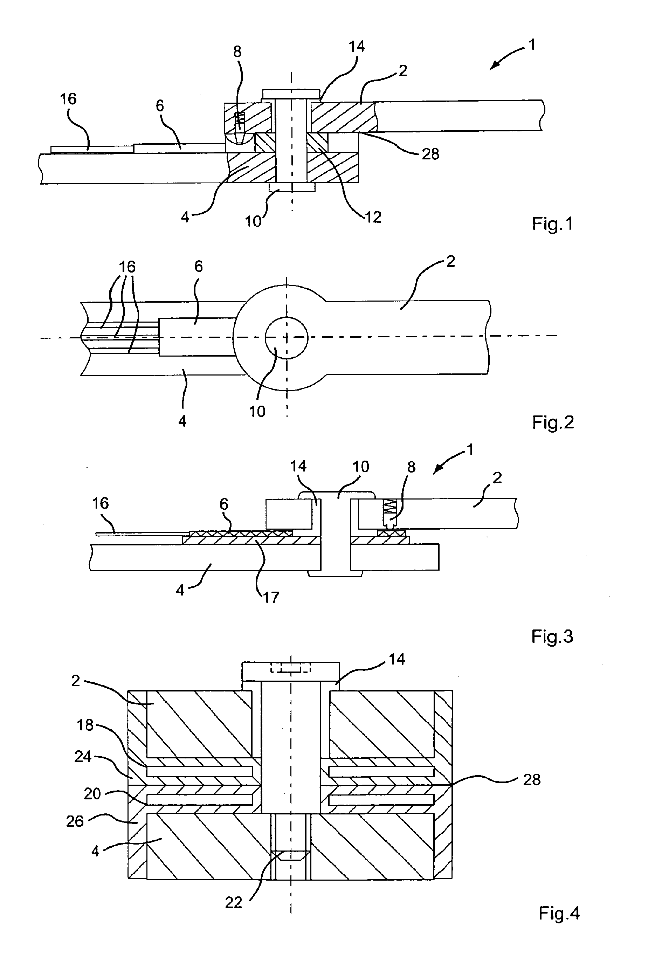

Das in Fig. 1 in gestreckter Lage dargestellte Drehgelenk 1 weist zwischen zwei Gelenkarmen 2 und 4 ein beispielsweise durch Kleben an dem Gestängeteil 4 angebrachtes Folienpotentiometer 6 auf, das über die Leiterbahn 16 mit z. B. einem Steuergerät (nicht dargestellt) verbunden ist. Für die Aufnahme des Folienpotentiometers 6, das ein Auswerteelement 6 bildet, kann in dem Gelenkarm 4 eine Aussparung vorgesehen werden, so dass die zu dem Gelenkarm 2 weisenden Oberflächen des Auswerteelements 6 und des Gelenkarms 4 beispielsweise bündig sind.

In dem Gelenkarm 2 ist ein das Folienpotentiometer berührender, elastisch vorgespannter Druck- bzw. Schleifstift 8 insgesamt parallel zur Drehachse des Drehgelenks aufgenommen, der punktuell die dem Gelenkarm 2 zugewandte Oberfläche des Folienpotentiometers 6 verformt und damit einen leitenden Kontakt innerhalb des Folienpotentiometers 6 bewirkt. Die Stelle des so hergestellten Kontaktes in dem Folienpotentiometer hängt von der Winkelstellung der Gelenkarme ab, so dass aus dem Widerstand des Folienpotentiometers die Drehstellung der Gelenkarme bestimmt werden kann. Der Schleifstift 8 bildet somit einen Drehwinkelgeber, dessen Relativstellung zum Folienpotentiometer von einer an die im dargestellten Beispiel dreiadrige Leiterbahn 16 angeschlossenen Steuereinheit (nicht dargestellt) kontinuierlich überwacht werden kann. Der Messbereich beträgt beispielsweise annähernd 360°.

Das Drehgelenk 1 wird beispielsweise mittels eines Niets 10 zusammengehalten, der einen Lagerzapfen bildet. Der zur Aufnahme des Folienpotentiometers 6 notwendige Abstand zwischen den beiden Gelenkarmen 2 und 4 wird durch eine Distanzscheibe 12 und eine Lagerbuchse 14 so eingestellt, dass sich die beiden Gelenkarme 2 und 4 weitgehend spielfrei relativ zueinander bewegen können. Hierbei ist die Höhe in Drehachsenrichtung der Distanzscheibe 12 so gewählt, dass sie mindestens dem Maß entspricht, um das das Folienpotentiometer 6 die die dem Gelenkarm 2 zugewandte Fläche des Gelenkarms 4 überragt. Die axiale Länge der Lagerbuchse 14, die in einem den Gelenkarm 2 übertragenden Flansch endet und sich auf der Distanzscheibe 12 abstützt, ist bevorzugt geringfügig größer als die Dicke des Gelenkarms 2.

Die Distanzscheibe 12, deren radial gerichteten Flächen vorteilhaft mit einem Gleitmittel beschichtet sind, kann einteilig mit der Lagerbuchse 14 ausgebildet sein.

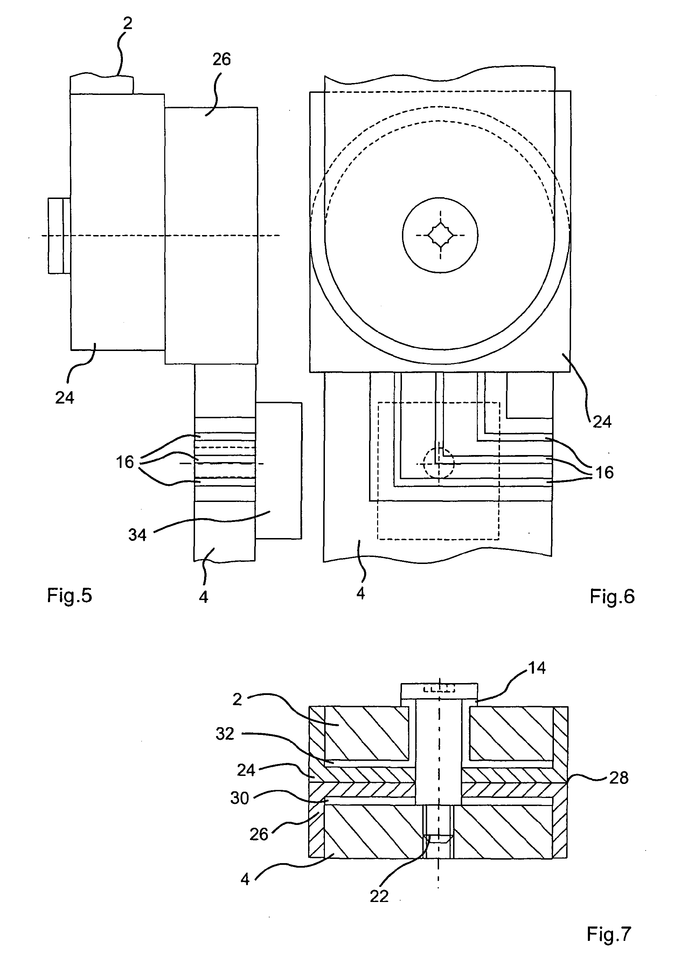

Um im Reparaturfall das Potentiometer einfach austauschbar zu machen, kann anstatt des Niets 10 auch eine Schraube 22 vorgesehen werden, wobei das Gestängeteil 4 ein entsprechendes Gewinde aufweist (siehe Fig. 3 und 5).

Insgesamt kann die beschriebene Drehwinkelerfassungsvorrichtung in einfacher Weise in das Drehgelenk integriert werden, wobei lediglich die Leiterbahn 16 in den Außenraum führt.

Fig. 3 zeigt eine gegenüber Fig. 1 abgeänderte Ausführungsform eines Drehgelenks 1. Sich entsprechende Teile sind mit gleichen Bezugszeichen belegt. Es werden nur die Abänderungen beschrieben. Bei der Ausführungsform gemäß Fig. 3 liegt das Folienpotentiometer 6 auf einer Grundplatte 17, beispielsweise aus Metall auf, die einheitlich für unterschiedlichste Drehgelenke verwendet werden kann und eine Vertiefung aufweisen kann, in der das Folienpotentiometer 6 aufgenommen ist. Auf der Grundplatte 17, die gegebenenfalls auch aus Kunststoff sein kann, stützt die Lagerbuchse 14 ab, die an ihrem unteren Ende mit einem Bund ausgebildet ist. Der Gelenkarm 2 ist zwischen dem Bund der Lagerbuchse 14 und dem Kopf des Niets 10 gehalten. Durch diese Anordnung werden auch Kippkräfte aufgenommen. Der Schleifstift 8 kann in einer eigenen Baugruppe, beispielsweise einer Hülse aufgenommen sein, die in den Gelenkarm 2 eingesetzt, beispielsweise eingeschraubt ist. Figuren 1 und 3 zeigen konstruktive Ausführungsbeispiele der Verwendung eines Folienpotentiometers, die in vielfältiger Weise abgeändert werden können, ohne dass der Grundgedanke der Erfindung verlassen wird, das Folienpotentiometer zur Drehwinkelerfassung zwischen den Gelenkarmen anzuordnen, wobei das Folienpotentiometer zusammen mit dem Schleifstift in unterschiedlichsten Gelenken eingesetzt werden kann, ohne dass wesentlicher zusätzlicher Bauraum beansprucht wird. Wenn das Folienpotentiometer 6 in eine Ausnehmung des Gelenkarms 4 eingesenkt wird, wird auch in axialer Richtung kein zusätzlicher Bauraum beansprucht.

Mit der Ausführungsform gemäß Fig. 1 bis 3 wurde beispielhaft eine Drehwinkelerfassung beschrieben, bei der sich der Drehwinkelgeber 8 und das Auswerteelement 6 berühren. Jedoch sind auch andere mit mechanischen Kontakten arbeitende Anordnungen denkbar.

Andere Ausführungsformen des erfindungsgemäßen Drehgelenks können mit berührungslosen Systemen arbeiten, wie zum Beispiel mit induktiven, magnetischen oder optischen Drehwinkelsensoren. Nachfolgend werden zwei bevorzugte Ausführungsformen mit berührungslosen Drehwinkelsensoren beschrieben, wobei die eine mit einem induktiven System arbeitet und die andere mit einem magnetischen System aufbauend auf dem Hall-Effekt arbeitet.

In den Fig. 4 und 5 ist die induktive Ausführungsform dargestellt, die einen als flachen Magneten ausgebildeten Drehwinkelgeber 18 und ein induktives Auswerteelement 20 aufweist, das als dünne Leiterplatten ausgebildet ist. Bei einer Relativdrehung zwischen dem Drehwinkelgeber und der Auswerteeinheit ändert sich en Stromfluss durch die Auswerteeinheit, so dass die Drehstellung ermittelt werden kann. Die Stromversorgung und die Signalauswertung der Auswerteeinheit erfolgt über Leiterbahnen 16, die mit einem Stecker 34 kontaktiert werden.

Der Drehwinkelgeber 18 und das Auswerteelement 20 sind jeweils in ein Gehäuseteil 24, 26 eingebettet, so dass sie vor Verschmutzung geschützt sind. Zusätzlich können die Gehäuseteile 24, 26 derart ausgebildet sein, dass äußere Störfelder abgeschirmt werden. Außerdem werden der Geber und das Auswerteelement in einem optimalen axialen Abstand gehalten.

Die Gehäuseteile 24 und 26 können in einfacher Weise an den Enden der Gelenkarme 2 und 4 angebracht werden und bilden die sich berührenden Gleitflächen 28 des Drehgelenks 1.

Weiterhin sind die Gehäuseteile 24 und 26 derart ausgebildet, dass sich die Lagerbuchse 14 direkt auf ihnen abstützen kann. Die Schaftlänge der Lagerbuchse 14 ist z.B. so gewählt, dass sie der Dicke des Gelenkarms 2 entspricht, wobei die die Gelenkarme verbindende Schraube 22 einen Absatz aufweist, der von der Unterseite des Schraubenkopfs einen Abstand gleich der Summe der Dicke des Gelenkarms 2 und der Dicke der beiden Gehäuseteile 24 und 26 aufweist. Somit werden die beiden Gehäuseteile 24 und 26 beim Verbinden des Drehgelenks mittels der Schraube 22 nicht aufeinander gepresst, so dass das Drehgelenk reibungsarm arbeitet und die Komponenten in den Gehäuseteilen 24 und 26 nicht beschädigt werden.

Alternativ kann die Lagerbuchse 14 so gestaltet sein, dass ihr Schaft auch durch die beiden Gehäuseteile hindurch dringt und sich auf dem Gelenkarm 4 abstützt. Dabei ist die Schaftlänge der Lagerbuchse 14 etwa gleich der Summe der Dicken der Gelenkarme 2 und 4 und der Gehäuseteile 24 und 26.

In der Fig. 7 ist eine weitere Variante einer berührungslosen Drehwinkelerfassungsvorrichtung dargestellt, die einen Magneten 32 als Drehwinkelgeber und ein Hall-Element 30 als Auswerteelement aufweist. Dabei sind der Drehwinkelgeber 32 und das Auswerteelement 30 derart in die Gehäuseteile 24 und 26 eingesetzt, dass sie an den von den Gleitflächen 28 abgewandten Flächen der Gehäuseteile 24 und 26 angeordnet sind.

Der weitere Aufbau der in Fig. 7 dargestellten Ausführungsform entspricht der Ausführungsform der Fig. 4.

Wie in den Fig. 4 und 7 dargestellt ist, kann das Drehgelenk 1 auch unter Verwendung einer Schraube bzw. eines Schraubbolzens 22 anstatt des Niets 10 zusammengehalten werden. Dabei kann der notwendige Abstand für die Montage des Drehwinkelgebers und des Auswerteelements beispielsweise durch den gewindelosen Schaftbereich der Schraube 22 und/oder durch die Lagerbuchse 14 gewährleistet werden.

Die Merkmale der beschriebenen Ausführungsformen können in unterschiedlicher Weise abgeändert und miteinander kombiniert werden. Der Drehwinkelgeber muss nicht ein Permanentmagnet sein. Er kann durch eine Induktivität gebildet sein, die je nach Drehstellung den über Zuleitungen angeregten Stromfluss durch die Auswerteschaltung unterschiedlich beeinflusst. Die erfindungsgemäßen Drehwinkelerfassungsvorrichtungen können in einfacher Weise in vorhandene Gestängelager integriert werden, so dass es möglich ist, eine einheitliche Drehwinkelerfassungsvorrichtung in unterschiedlichen Gestängen einzusetzen und nur durch Programmierung eines Steuergeräts an die unterschiedlichen Verdecke anzupassen.

### Bezugszeichenliste

- 1: Drehgelenk
- 2: Gelenkarm
- 4: Gelenkarm
- 6: Folienpotentiometer
- 8: Schleifstift
- 10: Niet
- 12: Distanzscheibe
- 14: Lagerbuchse
- 16: Leiterbahn
- 17: Grundplatte
- 18: Drehwinkelgeber
- 20: Auswerteelement
- 22: Schraube
- 24: Gehäuseteil
- 26: Gehäuseteil
- 28: Gleitfläche
- 30: Magnet
- 32: Hall-Element
- 34: Stecker

## Patentansprüche

1. Drehwinkelerfassungsvorrichtung zum Erfassen des Drehwinkels zwischen um eine Achse schwenkbar miteinander verbundenen Gelenkarmen (2, 4), wobei mit einem Gelenkarm (2, 4) drehfest ein Drehwinkelgeber (8; 18; 30) und mit dem anderen Gelenkarm (2, 4) drehfest ein Auswerteelement (6; 20; 32) verbunden ist,
**dadurch gekennzeichnet, dass**
der Drehwinkelgeber (8; 18; 30) und das Auswerteelement (6; 20; 32) in einem der Achse benachbarten Bereich an zueinander weisenden Flächen der Gelenkarme (2, 4) angeordnet sind.

2. Drehwinkelerfassungsvorrichtung nach Anspruch 1, **dadurch gekennzeichnet, dass** der Drehwinkelgeber (8; 18; 30) und/oder das Auswerteelement (6; 20; 32) in Aussparungen der zueinander weisenden Flächen aufgenommen sind.

3. Drehwinkelerfassungsvorrichtung nach Anspruch 1 oder 2, **dadurch gekennzeichnet, dass** einer der beiden Gelenkarme (2, 4) von einer einen Lagerzapfen (10; 22) umgebenden Lagerbuchse (14) durchdrungen ist, deren Schaftlänge mindestens der Dicke des sie umgebenden Bereichs des Gelenkarmes (2, 4) entspricht.

4. Drehwinkelerfassungsvorrichtung nach einem der Ansprüche 1 bis 3, **dadurch gekennzeichnet, dass** zwischen den Gelenkarmen (2,4) eine Distanzscheibe (12) angeordnet ist, deren Dicke mindestens so groß ist wie die von dem Drehwinkelgeber (8; 18; 30) und/oder dem Auswerteelement (6; 20, 32) zwischen den zueinander weisenden Flächen der Gelenkarme (2, 4) benötigte Höhe.

5. Drehwinkelerfassungsvorrichtung nach einem der Ansprüche 1 bis 4, **dadurch gekennzeichnet, dass** die Gelenkarme (2, 4) mittels eines Niets (10) miteinander schwenkbar verbunden sind.

6. Drehwinkelerfassungsvorrichtung nach einem der Ansprüche 1 bis 4, **dadurch gekennzeichnet, dass** die Gelenkarme mittels einer Schraube (22) miteinander schwenkbar verbunden sind.

7. Drehwinkelerfassungsvorrichtung nach einem der Ansprüche 1 bis 6, **dadurch gekennzeichnet, dass** die Drehwinkelerfassung unter Berührung zwischen dem Drehwinkelgeber (8) und dem Auswerteelement (6) erfolgt.

8. Drehwinkelerfassungsvorrichtung nach einem der Ansprüche 1 bis 6, **dadurch gekennzeichnet, dass** die Drehwinkelerfassung ohne Berührung zwischen dem Drehwinkelgeber (18; 30) und dem Auswerteelement (20; 32) erfolgt.

9. Drehwinkelerfassungsvorrichtung nach Anspruch 8, **dadurch gekennzeichnet, dass** der Drehwinkelgeber (18; 30) und/oder das Auswerteelement (20; 32) in Gehäuseteilen (24, 26) aufgenommen sind, die an den Endbereichen der Gelenkarme (2, 4) angebracht sind.
